# EUROPÄISCHE PATENTANMELDUNG

(11) **EP 4 686 840 A1**
(43) Veröffentlichungstag der Anmeldung: **04.02.2026**
(21) Anmeldenummer: 25189056.2
(22) Anmeldetag: 11.07.2025
(51) Int. Cl.: F16B 12/20

(54) **VERBINDER, ANORDNUNG UND VERFAHREN**

(30) Priorität: 01.08.2024 DE 102024121929
(71) Anmelder: Adolf Würth GmbH & Co. KG, 74653 Künzelsau (DE)
(72) Erfinder: BAUER, Eugen, 74564 Crailsheim (DE); BECK, Daniel, 69168 Wiesloch (DE)
(74) Vertreter: Patentanwälte Ruff, Wilhelm, Beier, Dauster & Partner mbB

(57) **Zusammenfassung**

Die Erfindung betrifft einen Verbinder zum Verbinden eines ersten Bauteils mit einem zweiten Bauteil, wobei der Verbinder ein erstes Verbinderbauteil und ein zweites Verbinderbauteil aufweist, wobei das erste Verbinderbauteil und das zweite Verbinderbauteil jeweils wenigstens zwei federnde Arme mit Klemmflächen am freien Ende aufweisen, wobei die Klemmflächen einander gegenüberliegen und jeweils an einer Außenseite des jeweiligen federnden Arms angeordnet sind und wobei die Innenseiten der federnden Arme einander zugewandt sind, wobei in dem ersten oder dem zweiten Verbinderbauteil ein relativ zum ersten Verbinderbauteil und zum zweiten Verbinderbauteil bewegliches Keilbauteil angeordnet ist und wobei das Keilbauteil relativ zum ersten und zum zweiten Verbinderbauteil wenigstens zwischen einer Klemmstellung und einer Freigabestellung bewegt werden kann, wobei das Keilbauteil in der Klemmstellung zwischen den beiden federnden Armen im ersten Verbinderbauteil und/oder zwischen den beiden federnden Armen im zweiten Verbinderbauteil angeordnet ist, an den Innenseiten der federnden Arme im ersten Verbinderbauteil und/oder im zweiten Verbinderbauteil anliegt und eine Bewegung der Klemmflächen an den federnden Armen im ersten Verbinderbauteil und/oder im zweiten Verbinderbauteil aufeinander zu blockiert.

## Beschreibung

Die Erfindung betrifft einen Verbinder zum Verbinden eines ersten Bauteils mit einem zweiten Bauteil, wobei der Verbinder ein erstes Verbinderbauteil und ein zweites Verbinderbauteil aufweist. Die Erfindung betrifft auch eine Anordnung mit zwei Bauteilen und einem Verbinder. Die Erfindung betrifft auch ein Verfahren zum lösbaren Verbinden eines ersten Bauteils und eines zweiten Bauteils mittels eines Verbinders.

Mit der Erfindung sollen ein Verbinder, eine Anordnung und ein Verfahren zum lösbaren Verbinden verbessert werden.

Erfindungsgemäß ist hierzu ein Verbinder mit den Merkmalen von Anspruch 1, eine Anordnung mit den Merkmalen von Anspruch 7 bzw. ein Verfahren mit den Merkmalen von Anspruch 10 vorgesehen. Vorteilhafte Weiterbildungen der Erfindung sind in den jeweiligen Unteransprüchen genannt.

Ein Verbinder zum Verbinden eines ersten Bauteils mit einem zweiten Bauteil weist ein erstes Verbinderbauteil und ein zweites Verbinderbauteil auf. Das erste Verbinderbauteil und das zweite Verbinderbauteil weisen jeweils wenigstens zwei federnde Arme mit Klemmflächen am freien Ende auf. Die Klemmflächen sind jeweils an einer Außenseite des jeweiligen federnden Arms angeordnet. Die Innenseiten der federnden Arme sind einander zugewandt. In dem ersten oder dem zweiten Verbinderbauteil ist ein relativ zum ersten Verbinderbauteil und relativ zum zweiten Verbinderbauteil bewegliches Keilbauteil angeordnet. Das Keilbauteil kann relativ zum ersten und relativ zum zweiten Verbinderbauteil wenigstens zwischen einer Klemmstellung und einer Freigabestellung bewegt werden. In der Klemmstellung ist das Keilbauteil zwischen den beiden federnden Armen im ersten Verbinderbauteil und/oder zwischen den beiden federnden Armen im zweiten Verbinderbauteil angeordnet, das Keilbauteil liegt an den Innenseiten der federnden Arme im ersten Verbinderbauteil und/oder im zweiten Verbinderbauteil an und das Keilbauteil blockiert eine Bewegung der Klemmflächen an den federnden Armen im ersten Verbinderbauteil und/oder im zweiten Verbinderbauteil aufeinander zu.

Mittels federnder Arme mit Klemmflächen und einem Keilbauteil, das zwischen die federnden Arme bewegt werden kann, kann ein mechanisch sehr einfach aufgebauter lösbarer Verbinder bereitgestellt werden, der zwei Bauteile äußerst sicher miteinander verbinden kann. Der Verbinder kann praktisch unsichtbar in Ausnehmungen in den Bauteilen eingeschoben werden. Lediglich eine kleine Öffnung in einem der Bauteile ist nötig, um das Keilbauteil von außerhalb der Bauteile bewegen zu können. Die Ausnehmungen in den Bauteilen können Hinterschnitte aufweisen, um eine besonders sichere, insbesondere formschlüssige, Verankerung der Verbinderbauteile in den Bauteilen sicherzustellen.

In der Freigabestellung weisen die Innenseiten der federnden Arme einen kleineren Abstand voneinander auf als in der Klemmstellung und beim Bewegen des Keilbauteils zwischen die federnden Arme werden die federnden Arme auseinandergedrückt.

Auf diese Weise können die Verbinderbauteile in der Freigabestellung in die jeweiligen Ausnehmungen in den miteinander zu verbindenden Bauteilen eingeschoben werden. Durch einfaches Bewegen des Keilbauteils in die Klemmstellung, beispielsweise Verschieben oder Verdrehen des Keilbauteils, können dann die federnden Arme auseinandergedrückt werden und ein sicherer Sitz der Klemmflächen an dem jeweiligen Bauteil ist gewährleistet.

In Weiterbildung der Erfindung ist das Keilbauteil drehbar in dem ersten Verbinderbauteil oder dem zweiten Verbinderbauteil gelagert.

Mittels einer Drehbewegung kann das Keilbauteil gleichzeitig zwischen die federnden Arme im ersten Verbinderbauteil und zwischen die federnden Arme im zweiten Verbinderbauteil bewegt werden und es können über eine Antriebsausbildung im Drehpunkt des Keilbauteils hohe Drehmomente aufgebracht werden. Die Zugangsöffnung in einem der Bauteile kann vergleichsweise klein ausfallen, so dass im zusammengebauten Zustand der beiden Bauteile, beispielsweise zweier Möbelbauteile, lediglich ein kleines, kaum sichtbares Loch zu sehen ist.

In Weiterbildung der Erfindung ist das Keilbauteil mit wenigstens einem Kulissenstein oder einer Kulissenführung und das erste Verbinderbauteil und/oder das zweite Verbinderbauteil mit einer Kulissenführung bzw. einem Kulissenstein versehen, wobei bei einer Bewegung des Keilbauteils von der Freigabestellung in die Klemmstellung der Kulissenstein in die Kulissenführung hineinbewegt wird.

Die Kulissenführung kann dabei als Schlitz oder als Nut ausgebildet sein. Mittels einer Bewegung des Keilbauteils können dadurch die beiden Verbinderbauteile aneinander gesichert werden und gleichzeitig die beiden Verbinderbauteile in der Ausnehmung des jeweiligen Bauteils gesichert werden. Der erfindungsgemäße Verbinder ist infolgedessen so ausgebildet, dass eine einfache Bewegung des Keilbauteils sowohl das erste als auch das zweite Verbinderbauteil in einer Ausnehmung in zwei unterschiedlichen Bauteilen, beispielsweise Möbelbauteilen, sichert und die beiden Verbinderbauteile und damit mittelbar auch die beiden Bauteile aneinander sichert. Die Verbindung der beiden Bauteile ist dabei lösbar, da durch einfaches Zurückbewegen des Keilbauteils die Verbindung wieder gelöst werden kann.

In Weiterbildung der Erfindung wird bei einer Bewegung des Keilbauteils von der Freigabestellung in die Klemmstellung das erste Verbinderbauteil in Richtung auf das zweite Verbinderbauteil zu vorgespannt.

Mit anderen Worten werden das erste Verbinderbauteil und das zweite Verbinderbauteil und somit auch die beiden miteinander zu verbindenden Bauteile bei einer Bewegung des Keilbauteils von der Freigabestellung in die Klemmstellung gegeneinander vorgespannt. Beispielsweise ist die Kulissenführung so ausgebildet, dass die Verbinderbauteile aufeinander zu gedrückt werden. Dies kann beispielsweise mit einem drehbaren Keilbauteil und einem exzentrischen Verlauf der Kulissenführung realisiert werden.

In Weiterbildung der Erfindung sind die Klemmflächen als Klemmschrägen ausgebildet.

Auf diese Weise kann zum einen ein sicherer Halt der Klemmflächen in Ausnehmungen der Bauteile erzielt werden und zum anderen können Toleranzen der Ausnehmungen in den Bauteilen im gewissen Maß ausgeglichen werden. Alternativ können die Klemmflächen auch an Rastnasen ausgebildet sein.

Eine erfindungsgemäße Anordnung weist zwei Bauteile und einen erfindungsgemäßen Verbinder auf, wobei jedes der Bauteile eine Ausnehmung mit wenigsten zwei einander gegenüberliegenden Hinterschnitten aufweist und wobei wenigstens zwei Klemmflächen der Verbinder in die Hinterschnitte im ersten Bauteil und wenigstens zwei Klemmflächen der Verbinder in die Hinterschnitte im zweiten Bauteil eingreifen.

Jedes der miteinander zu verbindenden Bauteile weist eine Ausnehmung mit wenigstens zwei einander gegenüberliegenden Hinterschnitten auf. Mit einem erfindungsgemäßen Verbinder können diese Bauteile dann besonders sicher miteinander verbunden werden, da die Klemmflächen der Verbinder im verbundenen, gespannten Zustand des Verbinders an den Hinterschnitten angreifen und dadurch sehr hohe Zugkräfte zwischen den Bauteilen in die Bauteile einleiten können. Die beiden Bauteile sind durch den Verbinder dabei lösbar verbunden, da die Klemmflächen des Verbinders mittels des Keilbauteils in Anlage an die Hinterschnitte in den Bauteilen auseinandergedrückt werden. Wird das Keilbauteil in die Freigabestellung zurückbewegt, werden auch die Klemmflächen von den Hinterschnitten wieder wegbewegt und die Bauteile können voneinander getrennt werden. Darüber hinaus können in der Freigabestellung auch die Verbinderbauteile aus den Bauteilen entfernt werden. Das Keilbauteil kann in der Klemmstellung auch die beiden Verbinderbauteile sicher miteinander verbinden. Eine Bewegung des Keilbauteils von der Freigabestellung in die Klemmstellung kann sowohl jedes der beiden Verbinderbauteile in der Ausnehmung des jeweiligen Bauteils sichern als auch die Verbinderbauteile aneinander sichern und damit auch die beiden Bauteile relativ zueinander lösbar fixieren.

In Weiterbildung der Erfindung weist die Ausnehmung eine T-artige Querschnittsform auf, wobei im Querschnitt ein erster Abschnitt, der von der Öffnung der Ausnehmung ausgeht, eine erste Breite hat und ein zweiter Abschnitt, der an den ersten Abschnitt anschließt, eine zweite Breite hat, wobei die zweite Breite größer ist als die erste Breite.

Eine solche im Querschnitt T-artige Ausnehmung kann beispielsweise mittels eines rotierenden Fräsers hergestellt werden, der einen Scheibenabschnitt mit einem größeren Querschnitt als der Schaft des Fräsers hat. Am Schaft des Fräsers sind ebenfalls Fräszähne vorgesehen. Ein solcher Fräser wird in das Bauteil eingetaucht und dann, in einer vordefinierten Tiefe, parallel zu einer Verbindungsfläche des Bauteils bewegt. Dadurch entsteht ein Hinterschnitt parallel zur Verbindungsfläche. Nach Herstellen der Hinterschnitte, beispielsweise links und rechts der Mittelbohrung, wird der Fräser wieder durch die Mittelbohrung herausgezogen.

In Weiterbildung der Erfindung ist das Keilbauteil relativ zum ersten Verbinderbauteil und/oder relativ zum zweiten Verbinderbauteil drehbar gelagert, wobei das erste Bauteil oder das zweite Bauteil eine Durchgangsöffnung aufweist, wobei durch die Durchgangsöffnung hindurch eine Antriebsausbildung des Keilbauteils zugänglich ist.

Beispielsweise ist die Antriebsausbildung als Innenvielrund oder Innensechskant ausgebildet. Die Durchgangsöffnung im ersten Bauteil oder im zweiten Bauteil kann dadurch vergleichsweise klein und infolgedessen kaum sichtbar sein. Nach dem Einführen eines passenden Antriebs, beispielsweise eines Schrauberbits, können dennoch hohe Drehmomente aufgebracht werden, um das Keilbauteil zu verdrehen.

Ein Verfahren zum lösbaren Verbinden eines ersten Bauteils und eines zweiten Bauteils mittels eines erfindungsgemäßen Verbinders, insbesondere zum Verbinden zweier Bauteile von Möbeln, weist folgende Schritte auf: Herstellen einer Ausnehmung mit zwei gegenüberliegenden Hinterschnitten im ersten Bauteil, Herstellen einer Ausnehmung mit zwei gegenüberliegenden Hinterschnitten im zweiten Bauteil, Einschieben des Verbinders abschnittsweise in die Ausnehmung im ersten Bauteil und abschnittsweise in die Ausnehmung im zweiten Bauteil, Verdrehen oder Verschieben des Keilbauteils des Verbinders und dadurch Bewegen der Klemmflächen an den federnden Armen des ersten Verbinderbauteils in die Hinterschnitte in der Ausnehmung im ersten Bauteil und Bewegen der Klemmflächen an den federnden Armen des zweiten Verbinderbauteils in die Hinterschnitte der Ausnehmung im zweiten Bauteil.

Mittels der Klemmflächen können dadurch das erste und das zweite Verbinderbauteil sicher im ersten Bauteil bzw. im zweiten Bauteil verankert werden. Gleichzeitig werden mittels des Keilbauteils, beispielsweise mittels einer Kulissenführung am Keilbauteil und mittels Kulissensteinen im ersten Verbinderbauteil sowie im zweiten Verbinderbauteil, die beiden Verbinderbauteile aneinander gesichert.

In Weiterbildung der Erfindung ist das Verdrehen des Keilbauteils von der Freigabestellung in die Klemmstellung zum Sichern der Verbindung zwischen dem ersten Bauteil und dem zweiten Bauteil vorgesehen.

Das Keilbauteil muss hierzu drehbar im ersten Verbinderbauteil oder im zweiten Verbinderbauteil gelagert sein. Durch eine Drehbewegung können sehr hohe Klemmkräfte aufgebracht werden. Das Keilbauteil kann eine kreisförmige oder leicht exzentrische Kulissenführung aufweisen, um gleichzeitig mit der Drehbewegung auch die beiden Verbinderbauteile aneinander zu sichern. Eine exzentrische Kulissenführung kann dazu verwendet werden, gleichzeitig mit der Drehbewegung des Keilbauteils die beiden Verbinderbauteile gegeneinander vorzuspannen.

In Weiterbildung der Erfindung ist das Verdrehen des Keilbauteils von der Klemmstellung in die Freigabestellung zum Lösen der Verbindung zwischen dem ersten Bauteil und dem zweiten Bauteil vorgesehen.

Die miteinander verbundenen Bauteile können dadurch in sehr einfacher Weise wieder voneinander getrennt werden. Auch das erste Verbinderbauteil und das zweite Verbinderbauteil kann dann wieder aus dem jeweiligen Bauteil, beispielsweise einem Möbelbauteil, entfernt werden. Dies ermöglicht das einfache Zerlegen eines Gegenstands, der aus mehreren Bauteilen zusammengesetzt ist, beispielsweise eines Möbelstücks. Die Verbinderbauteile können aus den jeweiligen Bauteilen entfernt werden, so dass auch eine getrennte Wiederverwertung oder Entsorgung der Verbinderbauteile und der Bauteile in sehr einfacher Weise möglich ist.

Weitere Merkmale und Vorteile der Erfindung ergeben sich aus den Ansprüchen und der folgenden Beschreibung bevorzugter Ausführungsformen der Erfindung im Zusammenhang mit den Zeichnungen. Einzelmerkmale der unterschiedlichen, dargestellten und/oder beschriebenen Ausführungsformen lassen sich dabei in beliebiger Weise miteinander kombinieren, ohne den Rahmen der Erfindung zu überschreiten. Dies gilt auch für die Kombination von Einzelmerkmalen ohne weitere Einzelmerkmale, mit denen sie im Zusammenhang dargestellt und/oder beschrieben sind.

In den Zeichnungen zeigen:
- Fig. 1: eine schematische, isometrische Darstellung zweier mit einem erfindungsgemäßen Verbinder verbundener Bauteile,
- Fig. 2: eine Schnittansicht der beiden Bauteile der Fig. 1 ohne den erfindungsgemäßen Verbinder,
- Fig. 3: eine auseinandergezogene Darstellung eines erfindungsgemäßen Verbinders gemäß einer ersten Ausführungsform,
- Fig. 4: eine erste Seitenansicht eines Keilbauteils des Verbinders der Fig. 3,
- Fig. 5: eine zweite Seitenansicht des Keilbauteils des Verbinders der Fig. 3,
- Fig. 6: eine erste isometrische Ansicht des Keilbauteils des Verbinders der Fig. 3,
- Fig. 7: eine zweite isometrische Ansicht des Keilbauteils des Verbinders der Fig. 3,
- Fig. 8: eine Seitenansicht der beiden Bauteile der Fig. 1,
- Fig. 9: eine Vorderansicht der beiden Bauteile der Fig. 1,
- Fig. 10: eine Ansicht auf die Schnittebene A-A in Fig. 8, wenn sich der Verbinder der Fig. 3 in der Freigabestellung befindet,
- Fig. 11: eine Ansicht auf die Schnittebene B-B in Fig. 9, wenn sich der Verbinder der Fig. 3 in der Freigabestellung befindet,
- Fig. 12: eine Ansicht auf die Schnittebene A-A in Fig. 8, wenn sich der Verbinder der Fig. 3 in der Klemmstellung befindet,
- Fig. 13: eine Ansicht auf die Schnittebene B-B in Fig. 9, wenn sich der Verbinder der Fig. 3 in der Klemmstellung befindet,
- Fig. 14: eine auseinandergezogene Darstellung eines erfindungsgemäßen Verbinders gemäß einer zweiten Ausführungsform,
- Fig. 15: eine erste Seitenansicht eines Keilbauteils des Verbinders der Fig. 14,
- Fig. 16: eine zweite Seitenansicht des Keilbauteils des Verbinders der Fig. 14,
- Fig. 17: eine erste isometrische Ansicht des Keilbauteils des Verbinders der Fig. 14,
- Fig. 18: eine zweite isometrische Ansicht des Keilbauteils des Verbinders der Fig. 14,
- Fig. 19: eine Ansicht auf die Schnittebene A-A in Fig. 8, wobei die beiden Bauteile mit dem Verbinder der Fig. 14 verbunden sind und sich der Verbinder in der Freigabestellung befindet,
- Fig. 20: eine Ansicht auf die Schnittebene B-B in Fig. 9, wobei die beiden Bauteile mit dem Verbinder der Fig. 14 verbunden sind und sich der Verbinder in der Freigabestellung befindet,
- Fig. 21: eine Ansicht auf die Schnittebene A-A in Fig. 8, wobei die beiden Bauteile mit dem Verbinder der Fig. 14 verbunden sind und sich der Verbinder in der Klemmstellung befindet und
- Fig. 22: eine Ansicht auf die Schnittebene B-B in Fig. 9, wobei die beiden Bauteile mit dem Verbinder der Fig. 14 verbunden sind und sich der Verbinder in der Klemmstellung befindet.

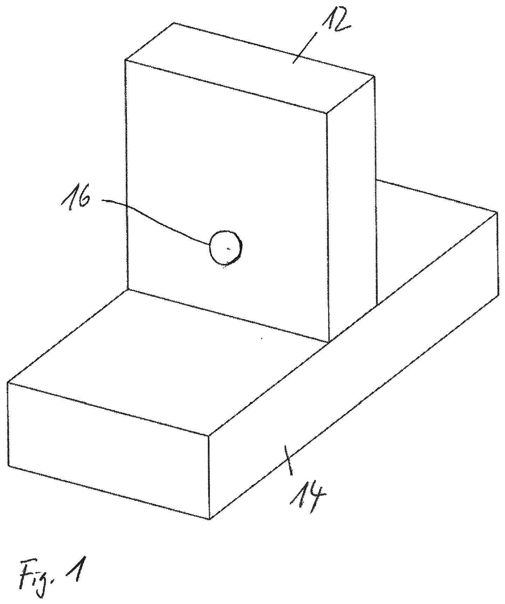

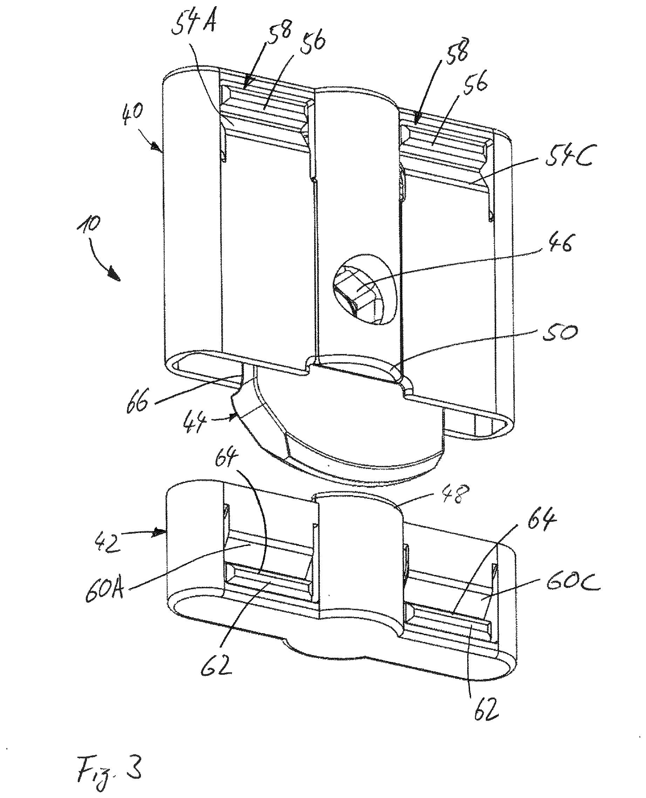

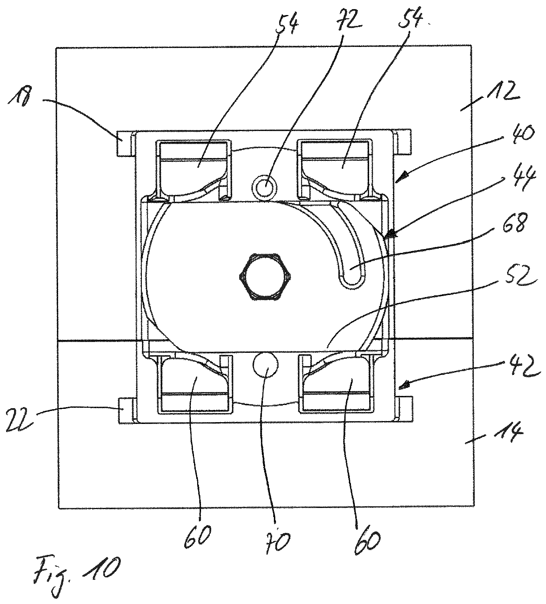

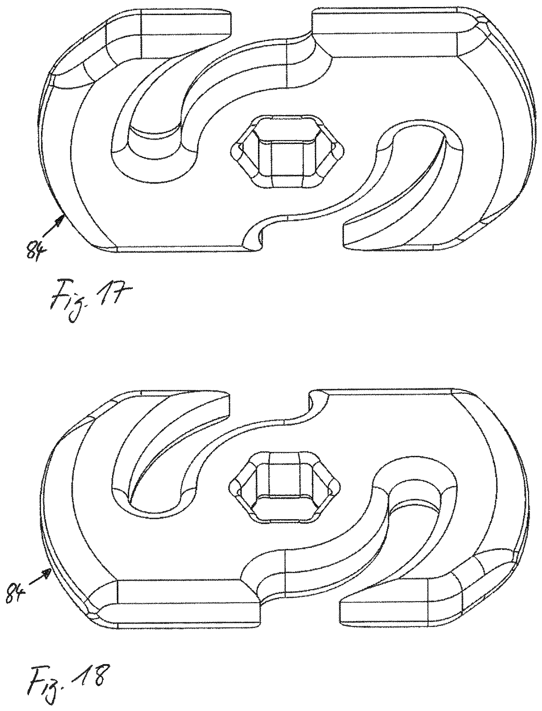

Fig. 1 zeigt in einer schematischen, isometrischen Ansicht zwei miteinander verbundene Bauteile 12, 14. Die beiden Bauteile 12, 14 können beispielsweise Bauteile eines Möbelstücks sein. Das erste Bauteil 12 liegt mit einer seiner schmalen Stirnflächen, der sogenannten Schmalfläche, auf der Oberseite, der sogenannten Breitfläche, des zweiten Bauteils 14 auf. Die beiden Bauteile 12, 14 sind lösbar mit einem in Fig. 1 nicht sichtbaren Verbinder verbunden, wie er beispielsweise in Fig. 3 und Fig. 17 dargestellt ist. Schnittansichten der beiden Bauteile 12, 14 mit einem eingebauten Verbinder sind beispielsweise in Fig. 10, Fig. 11, Fig. 12, Fig. 13, Fig. 19, Fig. 20, Fig. 21 und Fig. 22 dargestellt. Das erste Bauteil 12 weist eine Öffnung 16 auf, durch die eine Antriebsausbildung einer Keilscheibe des Verbinders zugänglich ist, was nachfolgend noch erläutert wird. Fig. 1 ist zu entnehmen, dass die lösbare Verbindung der beiden Bauteile 12, 14 von einer Außenseite der Bauteile 12, 14 her annähernd unsichtbar ist. Lediglich die Öffnung 16 ist zu erkennen. Die Öffnung 16 kann als Durchgangsöffnung durch das Bauteil 12 ausgebildet sein oder auch als Öffnung, die in eine Ausnehmung in dem Bauteil 12 führt, wobei in dieser Ausnehmung dann ein erstes Verbinderbauteil des Verbinders aufgenommen ist. Im Rahmen der Erfindung können auch zwei Bauteile mit ihren Schmalflächen verbunden werden, beispielsweise bei einem Plattenstoß zur Plattenverlängerung, oder zwei Bauteile können auch mit ihren Breitflächen verbunden werden.

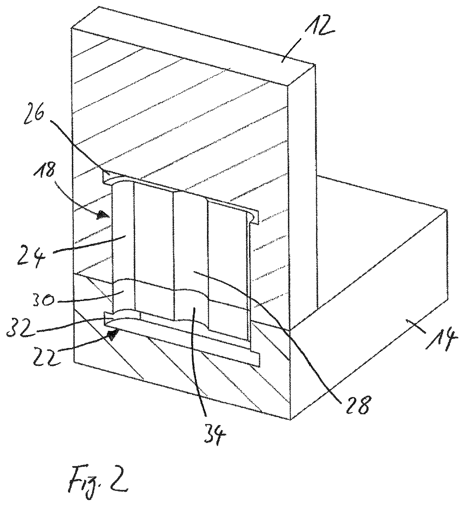

Fig. 2 zeigt die beiden Bauteile 12, 14 in einer Schnittansicht ohne den erfindungsgemäßen Verbinder, um die Form der Ausnehmungen 18, 22 im ersten bzw. zweiten Bauteil 12, 14 erkennen zu lassen.

Das erste Bauteil 12 ist mit einer im Querschnitt T-artigen Ausnehmung 18 versehen und das zweite Bauteil 14 ist mit einer im Querschnitt ebenfalls T-förmigen Ausnehmung 22 versehen. Die Ausnehmung 18 weist einen ersten Abschnitt 24 auf, der von der Schmalfläche des ersten Bauteils 12 ausgeht und der eine erste Breite und erste Tiefe aufweist. Die Ausnehmung 18 weist einen zweiten Abschnitt 26 auf, der eine zweite Breite und eine zweite Tiefe aufweist. Die Breite des ersten Abschnitts 24 wird in der Darstellung der Fig. 2 in Querrichtung des ersten Bauteils 12 gemessen, also von links oben nach rechts unten. Die Tiefe des ersten Abschnitts 24 wird in Fig. 2 entlang der Dickenrichtung des ersten Bauteils 12 gemessen, in Fig. 2 also von links unten nach rechts oben. In gleicher Weise werden die zweite Breite und die zweite Tiefe des zweiten Abschnitts 24 gemessen. Es ist zu erkennen, dass die Breite des ersten Abschnitts 24 kleiner ist als die Breite des zweiten Abschnitts 26. Dadurch ist am Übergang vom ersten Abschnitt 24 in den zweiten Abschnitt 26 an dem in Fig. 2 linken und rechten Ende jeweils ein Hinterschnitt ausgebildet. Darüber hinaus ist die erste Tiefe des ersten Abschnitts 24 mit Ausnahme des Bereichs einer Mittelbohrung 28 kleiner als die erste Tiefe des zweiten Abschnitts 26. Dadurch entsteht am Übergang zwischen dem ersten Abschnitt 24 und dem zweiten Abschnitt 26 an dem in Fig. 2 hinteren Ende und auch an dem in Fig. 2 vorderen, allerdings nicht sichtbaren Ende jeweils ein Hinterschnitt. Auch die Ausnehmung 22 im zweiten Bauteil 14 ist in gleicher Weise aufgebaut wie die erste Ausnehmung 18. Die zweite Ausnehmung 22 weist einen ersten Abschnitt 30 und einen zweiten Abschnitt 32 auf. Am Übergang zwischen dem ersten Abschnitt 30 und dem zweiten Abschnitt 32 sind Hinterschnitte ausgebildet, da die Breite des ersten Abschnitts 30 und die Tiefe des ersten Abschnitts 30 mit Ausnahme des Bereichs der Mittelbohrung 34 kleiner ist als die Breite des zweiten Abschnitts 32 beziehungsweise die Tiefe des zweiten Abschnitts 32.

Im Unterschied zur Ausnehmung 18 ist bei der Ausnehmung 22 lediglich der erste Abschnitt 30 kürzer als der erste Abschnitt 24 der ersten Ausnehmung 18. Im Übrigen weisen die Ausnehmungen 18, 22 identische Abmessungen auf.

Die Abmessungen 18 und 22 werden beispielsweise mithilfe eines speziellen Fräsers eingebracht. Der Fräser weist einen Scheibenabschnitt und einen Schaft auf. Sowohl am Scheibenabschnitt als auch am Schaft sind Fräszähne vorgesehen und der Scheibenabschnitt hat einen größeren Durchmesser als der Schaft. Der Fräser wird von unten her in die Schmalseite des Bauteils 12 eingeführt und der Scheibenabschnitt des Fräsers erzeugt dabei die Mittelbohrung 28. Wenn der Scheibenabschnitt auf Höhe des zweiten Abschnitts 26 angekommen ist, wird der Fräser parallel zur Schmalfläche des Bauteils 12 zuerst nach rechts und dann nach links bewegt oder umgekehrt. Dabei entstehen die weiteren Teile der Abschnitte 24, 26 und speziell wird der Hinterschnitt zwischen dem ersten Abschnitt 24 und dem zweiten Abschnitt 26 ausgebildet. Der Fräser wird dann wieder in die Mitte bewegt und durch die Mittelöffnung 28 herausgezogen.

In gleicher Weise wird die Ausnehmung 22 ausgebildet, indem der Fräser zunächst senkrecht zur Breitfläche des Bauteils 14 eingetaucht wird, so dass die Mittelbohrung 34 entsteht. Durch Bewegen des Fräsers nach links bzw. rechts werden dann die weiteren Teile der Abschnitte 30, 32 ausgebildet und vor allem wird der Hinterschnitt zwischen dem ersten Abschnitt 30 und dem zweiten Abschnitt 32 ausgebildet, bevor der Fräser wieder durch die Mittelbohrung 34 entfernt wird.

Fig. 3 zeigt einen erfindungsgemäßen Verbinder 10 gemäß einer ersten Ausführungsform zum Verbinden des ersten Bauteils 12 und des zweiten Bauteils 14. Der Verbinder 10 ist im auseinandergezogenen Zustand dargestellt und weist ein erstes Verbinderbauteil 40 und ein zweites Verbinderbauteil 42 auf. Das erste Verbinderbauteil 40 kann in die Ausnehmung 18 im ersten Bauteil 12 eingesetzt werden und das Verbinderbauteil 42 kann in die Ausnehmung 22 im zweiten Bauteil 14 eingesetzt werden.

In dem Verbinderbauteil 40 ist ein Keilbauteil 44 drehbar gelagert. Eine Antriebsausbildung 46 des Keilbauteils 44, wobei die Antriebsausbildung 46 die Form eines Innensechskants hat, ist in Fig. 3 zu erkennen. Das Keilbauteil 44 kann relativ zum ersten Verbinderbauteil 40 gedreht werden. Hierzu wird ein Sechskantschrauberbit in die Antriebsausbildung 46 eingesteckt und das Keilbauteil 44 dann gedreht. Im eingebauten Zustand des Verbinders 10 ist die Antriebsausbildung über die Öffnung 16 im ersten Bauteil 12 zugänglich, siehe Fig. 1.

Fig. 3 zeigt das Keilbauteil 44 in einer Klemmstellung, wobei diese Klemmstellung lediglich deshalb gewählt wurde, um in Fig. 3 wenigstens einen Abschnitt des Keilbauteils 44 erkennen zu lassen. In einer gegenüber der Klemmstellung der Fig. 3 um 90° verdrehten Freigabestellung wäre das Klemmbauteil 44 fast vollständig im ersten Verbinderbauteil 40 angeordnet, vgl. Fig. 10.

Die Außenabmessungen des Verbinderbauteils 40 sind auf die Innenabmessungen der Ausnehmung 18 im ersten Bauteil 12 abgestimmt, so dass sich das erste Verbinderbauteil 40 annähernd vollständig in die Ausnehmung 18 im ersten Bauteil 12 einschieben lässt.

Das zweite Verbinderbauteil 42 hat Außenabmessungen, die auf die Innenabmessungen der Ausnehmung 22 im zweiten Bauteil 14 abgestimmt sind. Das zweite Verbinderbauteil 42 lässt sich dadurch annähernd vollständig in die zweite Ausnehmung 22 einschieben.

Beim Verbinden der beiden Bauteile 12, 14 müssen die Verbinderbauteile 40, 42 lediglich in die Ausnehmungen 18 bzw. 22 eingeschoben werden. Im Unterschied zu konventionellen Verbindern müssen die Verbinderbauteile 40, 42 aber nicht in die Ausnehmungen 18, 22 eingeklebt oder dort festgeschraubt werden. Wie noch erläutert werden wird, ist der erfindungsgemäße Verbinder 10 so ausgebildet, dass durch Bewegen des Keilbauteils 44 von der Freigabestellung in die Klemmstellung sowohl die Verbinderbauteile 40, 42 sicher in der jeweiligen Ausnehmung 18, 22 verankert werden als auch die beiden Verbinderbauteile 40, 42 sicher miteinander verbunden werden.

Nach dem vollständigen Einschieben des ersten Verbinderbauteils 40 in die Ausnehmung 18 im ersten Bauteil 12 ragt lediglich noch ein kleiner Abschnitt 52 des Keilbauteils 44 über die Schmalfläche des ersten Bauteils 12 hinaus, vgl. Fig. 10.

Nach dem vollständigen Einschieben des zweiten Verbinderbauteils 42 in die Ausnehmung 22 im zweiten Bauteil 14 ragt lediglich noch ein kurzer Abschnitt 48 des zweiten Verbinderbauteils 42, der im Bereich der Mittelbohrung 34 angeordnet ist, über die Breitfläche des zweiten Bauteils 14 hinaus. Beim Aufeinandersetzen der zwei Bauteile 12, 14 greift dieser Abschnitt 48 in eine passende Ausnehmung 50 in der Wandung des ersten Verbinderbauteils 40 ein und sorgt dadurch für ein spürbares Einrasten und eine korrekte Positionierung der beiden Bauteile 12, 14 zueinander. Auch der über die Schmalfläche des ersten Bauteils 12 hinausragende Abschnitt 52 des Keilbauteils 44, siehe Fig. 10, sorgt für eine exakte Positionierung des ersten Bauteils 12 zum zweiten Bauteil 14, indem der Abschnitt 52 in die Eingangsöffnung des zweiten Verbinderbauteils 42 eindringt und dadurch das erste Bauteil 12 zum zweiten Bauteil 14 korrekt so positioniert, dass das Keilbauteil 44 von der Freigabestellung in die Klemmstellung verdreht werden kann und dabei, wie noch erläutert werden wird, ein Stück weiter in das zweite Verbinderbauteil 42 eindringt.

Das erste Verbinderbauteil 40 weist insgesamt vier federnde Arme 54a, 54b, 54c, 54d auf, wobei in Fig. 3 lediglich die federnden Arme 54a, 54c zu erkennen sind. Die federnden Arme 54 sind einstückig mit einem Gehäuse des ersten Verbinderbauteils 40 ausgebildet, das beispielsweise aus Kunststoffspritzguss gefertigt ist. An den freien Enden der federnden Arme 54 sind Klemmflächen 56 angeordnet, die mittels Klemmnasen 58 und speziell an der Unterseite der Klemmnasen 58 ausgebildet sind.

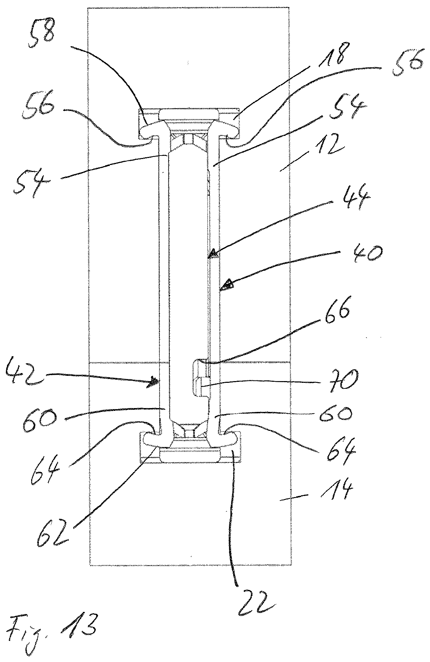

Das Keilbauteil 44 wird, vgl. Fig. 13, zwischen die Innenseiten der federnden Arme 54a, 54b, 54c, 54d gedreht und drückt dadurch die Innenseiten der federnden Arme 54 nach außen. Dadurch werden auch die Klemmnasen 58 und die Klemmflächen 56 nach außen gedrückt, siehe wieder Fig. 13, so dass die Klemmflächen 56 dann an dem Hinterschnitt der Ausnehmung 18 im ersten Bauteil 12 angreifen und das erste Verbinderbauteil 40 sicher in der Ausnehmung 18 im ersten Bauteil 12 festklemmen können.

Auch das zweite Verbinderbauteil 42 weist vier federnde Arme 60a, 60b, 60c, 60d auf, wobei in Fig. 3 lediglich die beiden federnden Arme 60a, 60c zu erkennen sind. Die federnden Arme 60 weisen jeweils Klemmnasen 62 auf, an deren Unterseite, die in Fig. 3 oben liegt, Klemmflächen 64 ausgebildet sind.

Wird das Keilbauteil 44 ausgehend von seiner Freigabestellung in die in Fig. 3 dargestellte Klemmstellung bewegt, drückt das Keilbauteil 44 die Innenseiten der federnden Arme 60 auseinander, so dass dadurch die federnden Arme 60 sowie auch die Klemmnasen 62 vom Klemmbauteil 44 aus gesehen nach außen gedrückt werden. Die Klemmflächen 64 der Klemmnasen können dadurch, siehe Fig. 13, in die Hinterschnitte der zweiten Ausnehmung 22 im zweiten Bauteil 14 eingreifen. Eine einfache Verdrehung des Keilbauteils 44 legt damit auch das zweite Verbinderbauteil 42 sicher in der Ausnehmung 22 des zweiten Bauteils 14 fest.

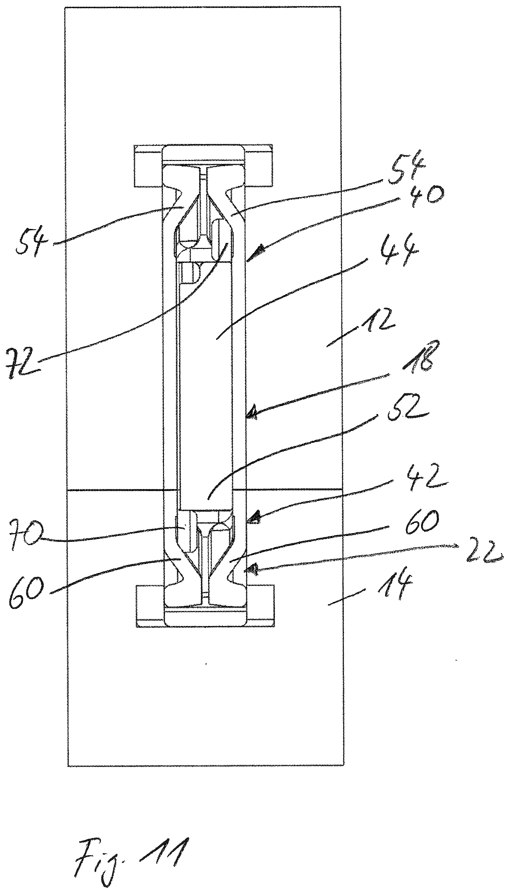

Mit der Drehung des Keilbauteils 44 von der Freigabestellung, siehe Fig. 11, in die Klemmstellung, siehe Fig. 13, wird gleichzeitig eine Kulissenbahn 66 im Keilbauteil 44 auf einen Kulissenstein 70 im zweiten Verbinderbauteil 42 bewegt, siehe Fig. 13. Dadurch wird gleichzeitig das zweite Verbinderbauteil 42 an dem ersten Verbinderbauteil 40 gesichert. Infolgedessen werden damit auch die beiden Bauteile 12, 14 sicher miteinander verbunden.

Es ist dabei festzuhalten, dass die beiden Verbinderbauteile 40, 42 nicht in die Ausnehmungen 18, 22 in den Bauteilen 12, 14 eingeklebt oder eingeschraubt werden müssen. Vielmehr bewirkt eine einfache Drehung des Keilbauteils 44 von der Freigabestellung in die Klemmstellung, dass zum einen die Verbinderbauteile 40, 42 sicher in der jeweiligen Ausnehmung 18, 22 im ersten Bauteil 12 bzw. zweiten Bauteil 14 gesichert werden und bewirkt auch, dass die beiden Verbinderbauteile 40, 42 aneinander gesichert werden.

Sollen die beiden Bauteile 12, 14 wieder voneinander gelöst werden, so muss lediglich das Keilbauteil 44 von der Klemmstellung wieder in die Freigabestellung gedreht werden. Die beiden Bauteile 12, 14 können dann voneinander getrennt werden und auch die Verbinderbauteile 40, 42 können wieder aus der jeweiligen Ausnehmung 18, 22 im ersten Bauteil 12 bzw. im zweiten Bauteil 14 herausgenommen werden. Ein Recycling der beiden Bauteile 12, 14 und der Verbinderbauteile 40, 42 ist dadurch problemlos und getrennt möglich.

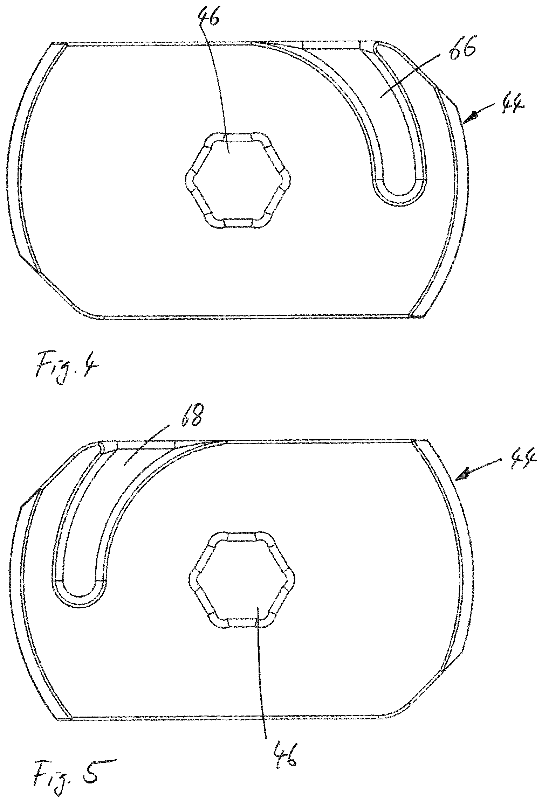

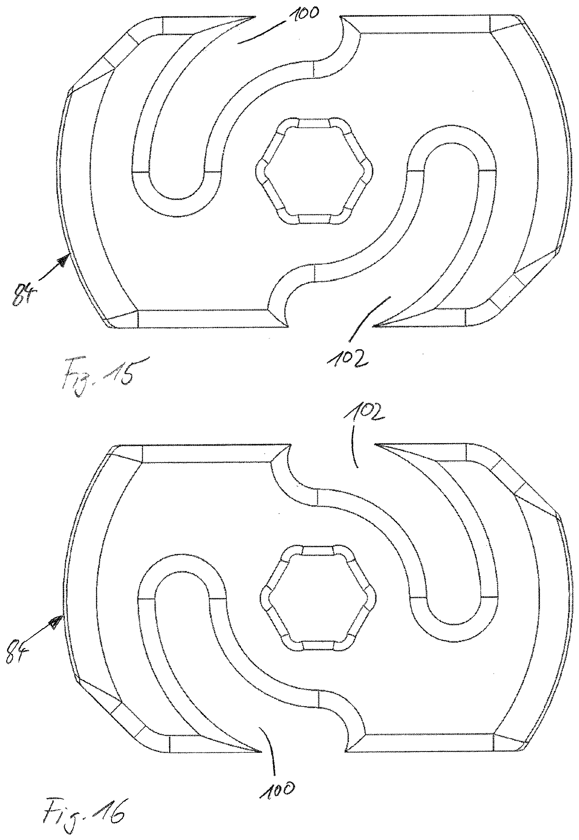

Fig. 4 zeigt das Keilbauteil 44 des Verbinders 10 der Fig. 3 in einer ersten Seitenansicht. Zu erkennen ist eine rechteckartige Grundform des Keilbauteils 44 mit abgerundeten Seitenkanten. Die Antriebsausbildung 46 des Keilbauteils 44 wurde bereits anhand der Fig. 3 erläutert. Ebenfalls bereits erläutert wurde eine als Nut ausgebildete Kulissenführung 66 im Keilbauteil 44. Diese Kulissenführung 66 wird, siehe Fig. 15, bei einer Drehung des Keilbauteils 44 über einen Kulissenstein 70 im zweiten Verbinder 42 bewegt. Die Kulissenführung 66 ist als Nut ausgebildet.

Fig. 5 zeigt eine weitere Seitenansicht des Keilbauteils 44 von der in Fig. 4 nicht sichtbaren Unterseite her. Es ist zu erkennen, dass das Keilbauteil 44 eine zweite als Nut ausgebildete Kulissenführung 68 aufweist. Die Kulissenführung 68 wird über einen Kulissenstein 72 im ersten Verbinderbauteil 40 bewegt, wenn das Keilbauteil 44 von der Freigabestellung in die Klemmstellung bewegt wird. Ein sehr sicherer Zusammenhalt des ersten Verbinderbauteils 40 und des zweiten Verbinderbauteils 42 ist dann dadurch gewährleistet, dass die Kulissenführung 66 an dem Kulissenstein 70 im zweiten Verbinderbauteil 42 angreift und die Kulissenführung 68 an dem Kulissenstein 70 am ersten Verbinderbauteil 40 angreift. Der Kulissenstein 70 ist einstückig mit dem zweiten Verbinderbauteil 42 ausgeführt und der Kulissenstein 72 im ersten Verbinderbauteil 40 ist einstückig mit dem ersten Verbinderbauteil 40 ausgeführt. Die beiden Verbinderbauteile 40, 42 sind in der Klemmstellung des Keilbauteils 44 somit mittels des Keilbauteils 44 sicher und zuverlässig miteinander verbunden.

Die jeweils als Nut ausgebildeten Kulissenführungen 66, 68 sind dabei relativ zu einer Drehachse im ersten Verbinderbauteil 40, der durch den Mittelpunkt der Antriebsausbildung 46 gebildet ist, leicht exzentrisch ausgebildet. Beim Drehen des Keilbauteils 44 wird somit dann, wenn die jeweiligen Kulissensteine entlang den Kulissenführungen 66, 68 laufen, das erste Verbinderbauteil 40 in Richtung auf das zweite Verbinderbauteil 42 zubewegt und dadurch werden auch die beiden Bauteile 12, 14 aufeinander zu gedrückt und gegeneinander vorgespannt.

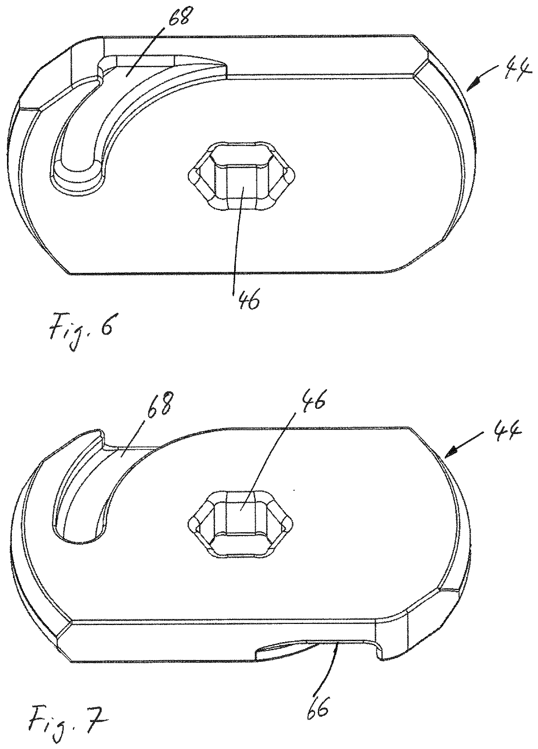

Fig. 6 zeigt eine erste isometrische Ansicht des Keilbauteils 44, wobei die Kulissenführung 68 zu erkennen ist. Fig. 7 zeigt eine weitere isometrische Ansicht des Keilbauteils 44, wobei wieder die Kulissenführung 68 und der Eingangsabschnitt der Kulissenführung 66 zu erkennen sind.

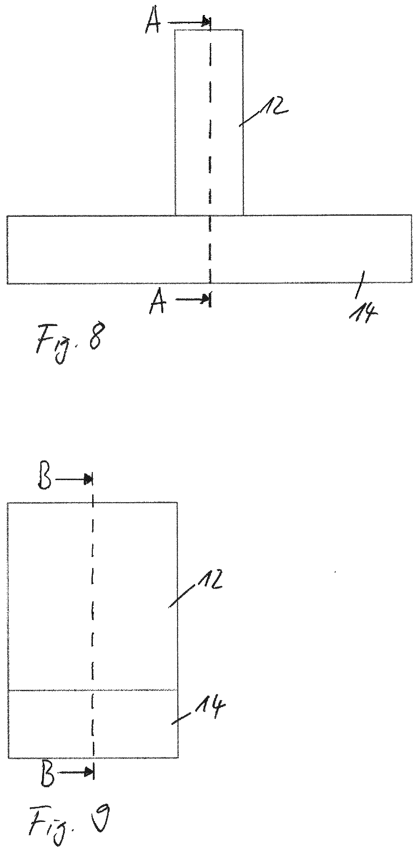

Fig. 8 zeigt eine schematische Seitenansicht des ersten Bauteils 12 und des zweiten Bauteils 14, wobei, wie in Fig. 1, das erste Bauteil 12 mit seiner Schmalfläche auf die Breitfläche des zweiten Bauteils 14 aufgesetzt ist. Zur Verdeutlichung ist eine Schnittebene A-A eingezeichnet, die, wie nachstehend noch erläutert werden wird, durch den Verbinder 10 verläuft, der die beiden Bauteile 12, 14 miteinander verbindet.

Fig. 9 zeigt eine Vorderansicht der beiden Bauteile 12, 14 aus Fig. 1, wobei eine Schnittebene B-B eingezeichnet ist, die durch den Verbinder 10 verläuft, der die beiden Bauteile 12, 14 miteinander verbindet.

Fig. 10 zeigt eine Ansicht auf die Schnittebene A-A in Fig. 8. Zu erkennen sind das erste Verbinderbauteil 40 im Bauteil 12 und das zweite Verbinderbauteil 42 im zweiten Bauteil 14. Das Keilbauteil 44 befindet sich in der Freigabestellung. Dies ist daran zu erkennen, dass das Keilbauteil nicht zwischen den federnden Armen 54 im ersten Verbinderbauteil 44 und auch nicht zwischen den federnden Armen 60 im zweiten Verbinderbauteil 42 liegt. Der Kulissenstein 70 im zweiten Verbinderbauteil 42 befindet sich noch außerhalb der in Fig. 10 nicht erkennbaren Kulissenführung 66 und der Kulissenstein 72 im ersten Verbinderbauteil 40 befindet sich noch außerhalb der Kulissenführung 68.

Fig. 11 zeigt eine Ansicht auf die Schnittebene B-B in Fig. 9. Wie ausgeführt wurde, befindet sich das Keilbauteil 44 noch in der Freigabestellung und weder zwischen den federnden Armen 54 im ersten Verbinderbauteil 40 noch zwischen den federnden Armen 60 im zweiten Verbinderbauteil 42. Das erste Verbinderbauteil 40 kann somit problemlos in die Ausnehmung 18 im ersten Bauteil 12 eingeschoben werden und das zweite Verbinderbauteil 42 kann problemlos in die Ausnehmung 22 im zweiten Bauteil 14 eingeschoben werden. Zu erkennen ist, dass der Abschnitt 52 des Keilbauteils 44 über die Schmalfläche des ersten Bauteils 12 hinausragt, wie bereits anhand der Fig. 10 erläutert wurde, und ein Stück weit in die Öffnung des zweiten Verbinderbauteils 42 hineinragt. Die beiden Bauteile 12, 14 sind somit korrekt zueinander positioniert, wenn die Schmalfläche des ersten Bauteils 12 die Breitfläche des zweiten Bauteils 14 berührt. Ausgehend von der in Fig. 11 dargestellten Stellung kann dann das Keilbauteil 44 in die Klemmstellung verdreht werden, um die beiden Bauteile 12, 14 aneinander zu sichern.

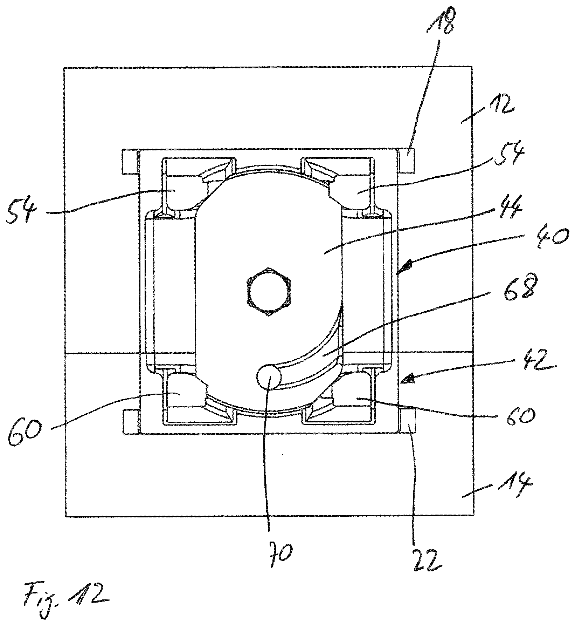

Fig. 12 zeigt eine Ansicht auf die Schnittebene A-A in Fig. 8, wobei das Keilbauteil 44 in die Klemmstellung bewegt wurde. Es ist zu erkennen, dass nun der Kulissenstein 70 im zweiten Verbinderbauteil 42, wobei der Kulissenstein 70 einstückig mit dem zweiten Verbinderbauteil 42 verbunden ist, nun in der Kulissenführung 68 im Keilbauteil 44 aufgenommen ist und auch bis an das Ende der Kulissenführung 68 bewegt wurde.

Es ist weiter zu erkennen, dass das Keilbauteil 44 nun auch zwischen die federnden Arme 54 im ersten Verbinderbauteil 40 und zwischen die federnden Arme 60 im zweiten Verbinderbauteil 42 bewegt wurde. Wie noch anhand der Fig. 15 erläutert werden wird, wurden die federnden Arme 54, 60 dadurch nach außen gedrückt.

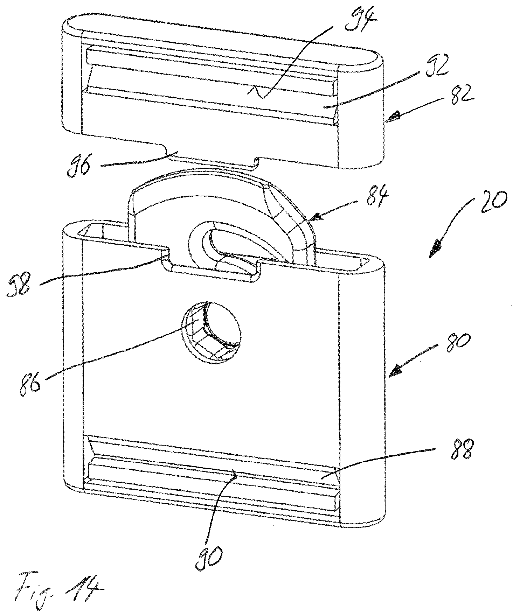

Im Zustand der Fig. 14 sind die beiden Verbinderbauteile 40, 42 zuverlässig aneinander gesichert. Die beiden Kulissensteine 70, 72 greifen in die jeweilige Kulissenführung 68, 66 im Keilbauteil 44 ein und verhindern dadurch, dass das erste Verbinderbauteil 40 und das zweite Verbinderbauteil 42 auseinanderbewegt werden können. Gleichzeitig greifen die federnden Arme 54 in den Hinterschnitt der Ausnehmung 18 im ersten Bauteil 12 und die federnden Arme 60 in den Hinterschnitt der Ausnehmung 22 im zweiten Bauteil 14 ein und verhindern dadurch, dass die beiden Bauteile 12, 14 auseinanderbewegt oder relativ zueinander bewegt werden können.

Fig. 13 zeigt eine Ansicht auf die Schnittebene B-B in Fig. 9. In dieser Ansicht ist zu erkennen, dass die Klemmflächen 56 an den federnden Armen 54 an den Hinterschnitten der Ausnehmung 18 im ersten Bauteil 12 angreifen und dass die Klemmflächen 64 der federnden Arme 60 am zweiten Verbinderbauteil 42 in die Hinterschnitte der Ausnehmung 22 im zweiten Bauteil 14 eingreifen. Da das Keilbauteil 44 verhindert, dass die beiden Verbinderbauteile 40, 42 relativ zueinander bewegt werden, sind infolgedessen auch die beiden Bauteile 12, 14 relativ zueinander gesichert.

Fig. 14 zeigt einen Verbinder 20 gemäß einer zweiten Ausführungsform der Erfindung. Der Verbinder 20 weist ein erstes Verbinderbauteil 80 und ein zweites Verbinderbauteil 82 auf. Ein Keilbauteil 84 ist drehbar im ersten Verbinderbauteil 80 gelagert. Eine Antriebsausbildung 86 des Keilbauteils 84 ist in Form eines Innensechskants ausgebildet und durch eine Durchgangsöffnung im Gehäuse des zweiten Verbinderbauteils 80 zu erkennen.

Das erste Verbinderbauteil 80 weist zwei federnde Arme 88 auf, von denen in Fig. 17 lediglich der dem Betrachter zugewandte federnde Arm 88 zu erkennen ist. Klemmnasen an dem freien Ende des federnden Arms 88 bilden jeweils eine Klemmfläche 90 aus.

Das zweite Verbinderbauteil 82 ist ebenfalls mit zwei federnden Armen 92 versehen, wobei Klemmnasen an den freien Enden der federnden Arme 92 Klemmflächen 94 ausbilden, die in Fig. 14 verdeckt sind. Das zweite Verbinderbauteil 82 weist an seinem in Fig. 14 unteren Rand des Gehäuses einen Vorsprung 96 auf, der in eine passende Ausnehmung 98 am Gehäuse des ersten Verbinderbauteils 80 eingreifen kann. Dadurch können das zweite Verbinderbauteil 82 und das erste Verbinderbauteil 80 noch vor dem Verdrehen des Klemmbauteils 84 in die Klemmstellung korrekt positioniert werden und auch die beiden Bauteile 12, 14 können korrekt zueinander positioniert werden, bevor das Keilbauteil 84 in die Klemmstellung verdreht wird.

Fig. 15 zeigt eine erste Seitenansicht des Keilbauteils 84 und Fig. 16 eine zweite Seitenansicht des Keilbauteils 84. Zu erkennen ist, dass das Keilbauteil 84 zwei Kulissenführungen 100, 102 aufweist, die jeweils als Schlitz ausgebildet sind und sich infolgedessen durch das Keilbauteil 84 hindurcherstrecken.

Fig. 17 und Fig. 18 zeigen jeweils eine isometrische Ansicht des Keilbauteils 84 aus unterschiedlichen Blickwinkeln.

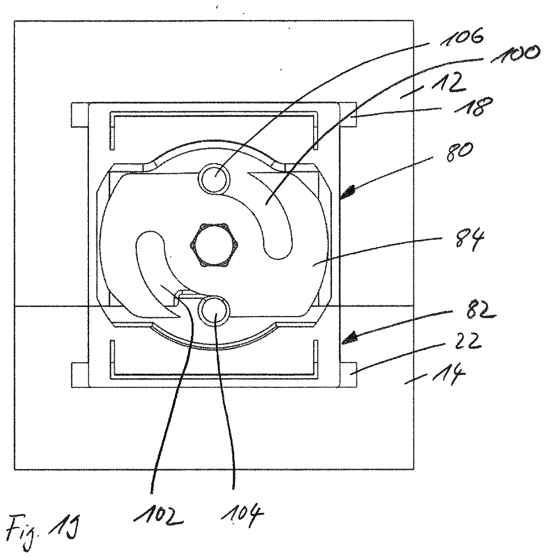

Fig. 19 zeigt eine Schnittansicht des zweiten Bauteils 14 und des ersten Bauteils 12, vergleiche Fig. 8. Das erste Verbinderbauteil 80 ist in der Ausnehmung 18 im ersten Bauteil 12 angeordnet und das zweite Verbinderbauteil 82 ist in der Ausnehmung 22 im zweiten Bauteil 14 angeordnet.

Das Keilbauteil 84 ist in Fig. 19 in der Freigabestellung angeordnet und ragt, wie Fig. 19 zu entnehmen ist, ein Stück weit über die Schmalfläche des ersten Bauteils 12 hinaus. Zusammen mit den Vorsprüngen 96 und den Ausnehmungen 98, siehe Fig. 14, kann dadurch sichergestellt werden, dass das erste Bauteil 12 und das zweite Bauteil 14 korrekt zueinander positioniert werden können, noch bevor das Keilbauteil 84 in die Klemmstellung bewegt wird.

Fig. 19 lässt erkennen, dass ein Kulissenstein 104, der einstückig bzw. fest mit dem zweiten Verbinderbauteil 82 verbunden ist, bereits am Anfang der Kulissenführung 102 im Keilbauteil 84 angeordnet ist. Ein Kulissenstein 106, der einstückig bzw. fest mit dem ersten Verbinderbauteil 80 verbunden ist, liegt bereits am Anfang der Kulissenführung 100 im Keilbauteil 84. Die Kulissensteine 104, 106 sind als Querstreben der jeweiligen Gehäuse der Verbidnerbauteile 80, 82 ausgebildet, so dass der Kulissenstein 104 die Vorderwand und die Rückwand des zweiten Verbinderbauteils 82 miteinander verbindet und der Kulissenstein 106 die Vorderwand und die Rückwand des Gehäuses des ersten Verbinderbauteils 80 miteinander verbindet.

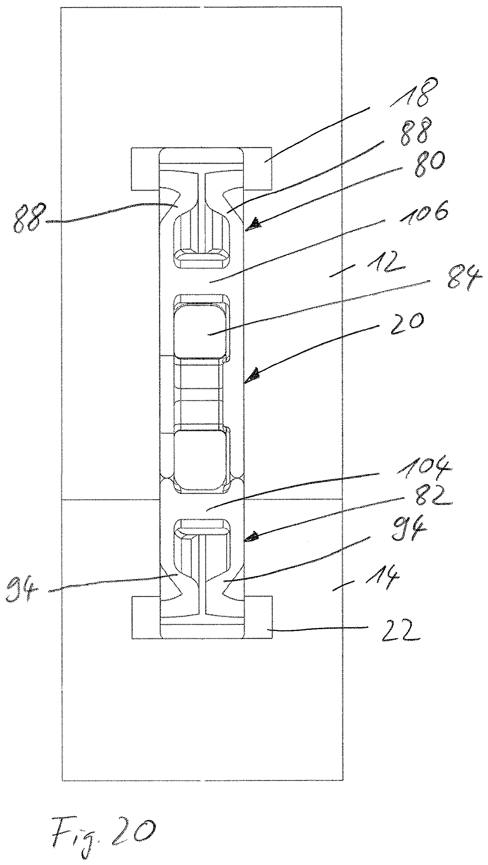

Fig. 20 zeigt eine Schnittansicht der beiden Bauteile 12, 14 mit dem in den Bauteilen 12, 14 angeordneten Verbinder 20, wobei sich das Keilbauteil 84 in der Freigabestellung befindet, vergleiche Fig. 9. Die federnden Arme 88, 94 sind noch nicht durch das Keilbauteil 84 nach außen gedrückt worden und infolgedessen greifen die Klemmflächen an den federnden Armen 88, 94 auch noch nicht an den Hinterschnitten der Ausnehmungen 18 im ersten Bauteil 12 bzw. 22 im zweiten Bauteil 14 an. Im Zustand der Fig. 20 können die beiden Bauteile 12, 14 somit noch voneinander getrennt werden. Zu erkennen ist in Fig. 20, dass das Gehäuse des zweiten Verbinderbauteils 82 ein Stück weit über die Breitfläche des zweiten Bauteils 14 hinausragt, nämlich mit dem Vorsrprüngen 96, siehe Fig. 14, und mit diesen herausragenden Teilen in die Ausnehmung 18 im ersten Bauteil 12 eingreift. Die beiden Bauteile 12, 14 können dadurch passgenau zueinander positioniert werden, noch bevor das Keilbauteil 84 von der Freigabestellung in die Klemmstellung bewegt wird.

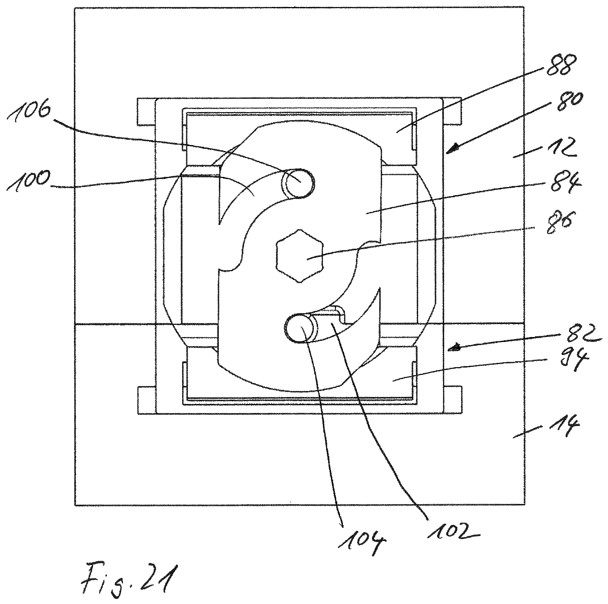

Fig. 21 zeigt eine der Fig. 19 vergleichbare Schnittansicht, wobei das Keilbauteil 84 nun in die Klemmstellung gedreht wurde. Ausgehend von der Freigabestellung der Fig. 19 wurde das Klemmbauteil 84 hierzu entgegen dem Uhrzeigersinn um 90° verdreht. Der Kulissenstein 104 des zweiten Verbinderbauteils 82 ist nun am Ende der Kulissenführung 102 und der Kulissenstein 106 ist am Ende der Kulissenführung 100 angeordnet. Wie Fig. 20 zu entnehmen ist, sind die Kulissensteine 104, 106 als Querstreben ausgebildet. Das Keilbauteil 84 sichert somit in der Klemmstellung der Fig. 21 die beiden Verbinderbauteile 80, 82 aneinander. Wie bereits ausgeführt wurde, sind die Kulissenführungen 100, 102 relativ zu einer Drehachse des Keilbauteils 84, die durch den Mittelpunkt der Antriebsausbildung 86 definiert ist, leicht exzentrisch ausgebildet, so dass die Verbinderbauteile 80, 82 in der Klemmstellung der Fig. 21 gegeneinander gedrückt und damit gegeneinander vorgespannt werden.

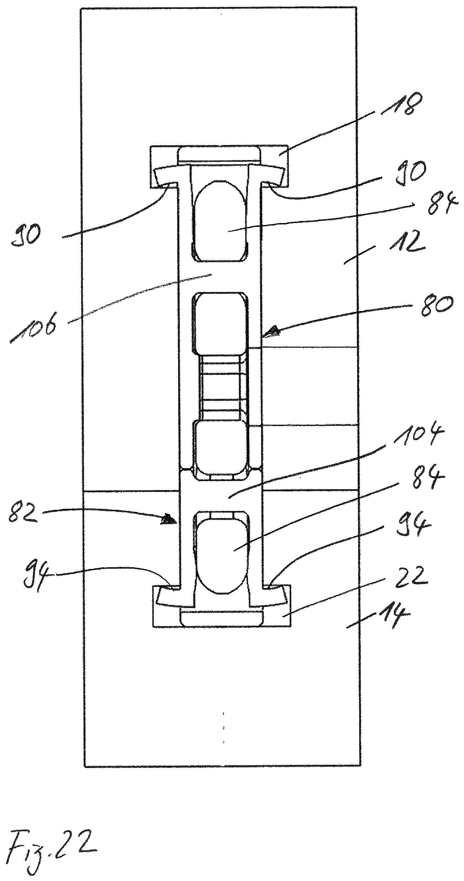

Gleichzeitig wurde durch die Drehung des Keilbauteils 84 von der Freigabestellung der Fig. 19 in die Klemmstellung der Fig. 21 das Keilbauteil 84 abschnittsweise zwischen die federnden Arme 88 des ersten Verbinderbauteils 80 und zwischen die federnden Arme 94 des zweiten Verbinderbauteils 82 bewegt. Dadurch greifen nun die Klemmflächen 90, 94 an den Klemmnasen der federnden Arme 88, 94 in die Hinterschnitte der Ausnehmungen 18, 22 in den Bauteilen 12 bzw. 14 ein und sichern dadurch die Bauteile 12, 14 zuverlässig aneinander. Dies ist Fig. 22 zu entnehmen.

Fig. 22 lässt erkennen, dass die Klemmflächen 94 an den Hinterschnitten der Ausnehmung 22 im zweiten Bauteil 14 angreifen und dass die Klemmflächen 90 an den Hinterschnitten der Ausnehmung 18 im ersten Bauteil 12 angreifen. Das Keilbauteil 84 drückt die federnden Arme des ersten Verbinderbauteils und des zweiten Verbinderbauteils 82 auseinander und hält dadurch die Klemmflächen 94, 90 in Anlage an den Hinterschnitten der Ausnehmungen 18, 22. Gleichzeitig sind die Kulissensteine 104, 106, die jeweils als Querstreben ausgebildet sind, in den Kulissenführungen des Keilbauteils 84 aufgenommen, so dass das erste Verbinderbauteil 80 und das zweite Verbinderbauteil 82 und auch das erste Bauteil 12 und das zweite Bauteil 14 fest miteinander verbunden sind.

Wie bereits ausgeführt wurde, können die beiden Bauteile 12, 14 in einfacher Weise wieder voneinander gelöst werden, indem das Keilbauteil 84 von der Klemmstellung der Fig. 21 und 22 in die Freigabestellung der Fig. 19 und 20 zurückgedreht wird. Die beiden Bauteile 12, 14 können dann voneinander getrennt werden und, falls erforderlich, kann auch das erste Verbinderbauteil 80 wieder aus der Ausnehmung 18 im ersten Bauteil 12 entnommen werden und das zweite Verbinderbauteil 82 kann aus der Ausnehmung 22 im zweiten Bauteil 14 herausgenommen werden.

## Patentansprüche

1. Verbinder zum Verbinden eines ersten Bauteils mit einem zweiten Bauteil, wobei der Verbinder ein erstes Verbinderbauteil und ein zweites Verbinderbauteil aufweist, wobei das erste Verbinderbauteil und das zweite Verbinderbauteil jeweils wenigstens zwei federnde Arme mit Klemmflächen am freien Ende aufweisen, wobei die Klemmflächen jeweils an einer Außenseite des jeweiligen federnden Armes angeordnet sind und wobei die Innenseiten der federnden Arme einander zugewandt sind, wobei in dem ersten oder dem zweiten Verbinderbauteil ein relativ zum ersten Verbinderbauteil und relativ zum zweiten Verbinderbauteil bewegliches Keilbauteil angeordnet ist und wobei das Keilbauteil relativ zum ersten und relativ zum zweiten Verbinderbauteil wenigstens zwischen einer Klemmstellung und einer Freigabestellung bewegt werden kann, wobei das Keilbauteil in der Klemmstellung zwischen den beiden federnden Armen im ersten Verbinderbauteil und/oder zwischen den beiden federnden Armen im zweiten Verbinderbauteil angeordnet ist, an den Innenseiten der federnden Arme im ersten Verbinderbauteil und/oder im zweiten Verbinderbauteil anliegt und eine Bewegung der Klemmflächen an den federnden Armen im ersten Verbinderbauteil und/oder im zweiten Verbinderbauteil aufeinander zu blockiert.

2. Verbinder nach Anspruch 1, **dadurch gekennzeichnet, dass** in der Freigabestellung die Innenseiten der federnden Arme einen kleineren Abstand voneinander aufweisen als in der Klemmstellung und dass beim Bewegen des Keilbauteils zwischen die federnden Arme die federnden Arme auseinandergedrückt werden.

3. Verbinder nach Anspruch 1 oder 2, **dadurch gekennzeichnet, dass** das Keilbauteil drehbar in dem ersten Verbinderbauteil oder dem zweiten Verbinderbauteil gelagert ist.

4. Verbinder nach einem der vorstehenden Ansprüche, **dadurch gekennzeichnet, dass** das Keilbauteil mit wenigstens einem Kulissenstein oder einer Kulissenführung und das erste Verbinderbauteil und/oder das zweite Verbinderbauteil mit einer Kulissenführung beziehungsweise einem Kulissenstein versehen ist und wobei bei einer Bewegung des Keilbauteils von der Freigabestellung in die Klemmstellung der Kulissenstein in die Kulissenführung hinein bewegt wird.

5. Verbinder nach Anspruch 4, **dadurch gekennzeichnet, dass** bei einer Bewegung des Keilbauteils von der Freigabestellung in die Klemmstellung das erste Verbinderbauteil in Richtung auf das zweite Verbinderbauteil zu vorgespannt wird.

6. Verbinder nach einem der vorstehenden Ansprüche, **dadurch gekennzeichnet, dass** die Klemmflächen als Klemmschrägen ausgebildet sind.

7. Anordnung mit zwei Bauteilen und einem Verbinder nach wenigstens einem der vorstehenden Ansprüche, wobei jedes der Bauteile eine Ausnehmung mit wenigstens zwei einander gegenüberliegenden Hinterschnitten aufweist und wobei wenigstens zwei Klemmflächen der Verbinder in die Hinterschnitte im ersten Bauteil und wenigstens zwei Klemmflächen der Verbinder in die Hinterschnitte im zweiten Bauteil eingreifen.

8. Anordnung nach Anspruch 7, **dadurch gekennzeichnet, dass** die Ausnehmung eine T-artige Querschnittsform aufweist, wobei im Querschnitt ein erster Abschnitt, der von der Öffnung der Ausnehmung ausgeht, eine erste Breite hat und ein zweiter Abschnitt, der an den ersten Abschnitt anschließt, eine zweite Breite hat, wobei die zweite Breite größer ist als die erste Breite.

9. Anordnung nach Anspruch 7 oder 8, **dadurch gekennzeichnet, dass** das Keilbauteil relativ zum ersten Verbinderbauteil und/oder zum zweiten Verbinderbauteil drehbar gelagert ist, wobei das erste Bauteil oder das zweite Bauteil eine Durchgangsöffnung aufweist, wobei durch die Durchgangsöffnung hindurch eine Antriebsausbildung des Keilbauteils zugänglich ist.

10. Verfahren zum lösbaren Verbinden eines ersten Bauteils und eines zweiten Bauteils mittels eines Verbinders nach wenigstens einem der vorstehenden Ansprüche 1 bis 6, insbesondere zweier Bauteile von Möbeln, **gekennzeichnet durch** Herstellen einer Ausnehmung mit zwei gegenüberliegenden Hinterschnitten im ersten Bauteil, Herstellen einer Ausnehmung mit zwei gegenüberliegenden Hinterschnitten im zweiten Bauteil, Einschieben des Verbinders abschnittsweise in die Ausnehmung im ersten Bauteil und abschnittsweise in die Ausnehmung im zweiten Bauteil, Verdrehen oder Verschieben des Keilbauteils des Verbinders und dadurch Bewegen der Klemmflächen an den federnden Armen des ersten Verbinderbauteils in die Hinterschnitte in der Ausnehmung im ersten Bauteil und Bewegen der Klemmflächen an den federnden Armen des zweiten Verbinderbauteils in die Hinterschnitte der Ausnehmung im zweiten Bauteil.

11. Verfahren nach Anspruch 10, **gekennzeichnet durch** Verdrehen des Keilbauteils von der Freigabestellung in die Klemmstellung zum Sichern der Verbindung zwischen dem ersten Bauteil und dem zweiten Bauteil.

12. Verfahren nach Anspruch 10, **gekennzeichnet durch** Verdrehen des Keilbauteils von der Klemmstellung in die Freigabestellung zum Lösen der Verbindung zwischen dem ersten Bauteil und dem zweiten Bauteil.
